# EUROPEAN PATENT APPLICATION

(11) **EP 4 411 616 A1**
(43) Date of publication of application: **07.08.2024**
(21) Application number: 22875118.6
(22) Date of filing: 29.09.2022
(51) Int. Cl.: G06Q 20/30, G06Q 20/36, G06Q 20/40

(54) **POSITIONING AND PAYMENT METHOD, APPARATUS AND SYSTEM BASED ON INTERNET OF VEHICLES**

(30) Priority: 30.09.2021 CN 202111165812
(71) Applicant: Digital Currency Institute, The People's Bank of China, Beijing 100071 (CN)
(72) Inventor: DI, Gang, Beijing 100071 (CN); MU, Changchun, Beijing 100071 (CN); GUO, Jianchang, Beijing 100071 (CN); ZHAO, Xinyu, Beijing 100071 (CN); CUI, Peidong, Beijing 100071 (CN); YU, Peng, Beijing 100071 (CN)
(74) Representative: Studio Torta S.p.A.
(86) International application number: PCT/CN2022/122855
(87) International publication number: WO 2023/051737

(57) **Abstract**

The present disclosure relates to the technical field of computers. Provided are a positioning and paying method, apparatus and system based on the Internet of Vehicles. A specific implementation of the method comprises: an in-vehicle client obtains position information of a vehicle on the basis of the Internet of Vehicles; and a management server determines a corresponding service entity for the vehicle on the basis of the position information, so as to automatically complete a fee payment operation by using a first digital currency wallet that is included in the in-vehicle client and a second digital currency wallet that is included in the service entity. Thus, the problems of a low degree of automation and a low payment efficiency caused by manual fee payment are overcome, thereby enhancing the user experience.

## Description

### Cross-Reference to Related Application

The present disclosure claims priority to Chinese Patent Application No.202111165812.8, filed on September 30, 2021 and entitled "Positioning and Paying Method, Apparatus and System Based on Internet of Vehicles", and the content disclosed by the Chinese patent application is incorporated herein by reference as part or all of the present disclosure.

### Technical Field

The present disclosure relates to the technical field of computers, and in particular to a positioning and paying method, apparatus and system based on the Internet of Vehicles.

### Background

With the rapid development of wireless communication technologies, the Internet of Vehicles technology based on the wireless communication technology is being applied more and more widely. For example, the Internet of Vehicles technology is applied to intelligent cities and intelligent traffic, so as to implement intelligent vehicle management, intelligent vehicle dispatching, etc.

At present, in aspect of intelligent vehicle management and dispatching, for example, in vehicle charging management, vehicle fueling management, and vehicle parking management, generally, the relationship between a vehicle and a vehicle service providing device (for example, a charging device) is determined by means of technologies such as Internet of Vehicles and positioning. After the user confirms that the service is completed, the user needs to perform an additional payment operation, for example, manually paying a fee by swiping a card or scanning a payment code. The degree of automation of payment is low, and the user experience is affected.

### Summary

In view of this, the embodiments of the present disclosure provide a positioning and paying method, apparatus and system based on Internet of Vehicles.

According to a first aspect of an embodiment of the present disclosure, provided is a positioning and paying method based on Internet of Vehicles, which is applied to an in-vehicle client having a first digital currency wallet and comprises: sending a service request to a service provider, and receiving a service entity identifier sent by the service provider with regard to the service request; in cases where the first digital currency wallet completes payment authorization with regard to the service entity identifier, receiving fee deduction information sent by the service provider, and generating a payment digital currency string matching the fee deduction information by means of the first digital currency wallet; and transmit the payment digital currency string to a second digital currency wallet included in the service provider.

According to one or more embodiments of the present disclosure, provided is a positioning and paying method based on Internet of Vehicles, wherein
the service request comprises position information and a service type; receiving the service entity identifier sent by the service provider with regard to the service request comprises: receiving a service entity identifier sent by the service provider and corresponding to the position information and the service type.

According to one or more embodiments of the present disclosure, the positioning and paying method based on Internet of Vehicles comprises: calculating, in response to receiving a service trigger, position information by means of any one or more of Internet of Vehicles distance information, map information of a vehicle where the in-vehicle client is located, image information of the vehicle, and geographical information indicated by a positioning system; and encapsulating the position information into the service request.

According to one or more embodiments of the present disclosure, provided is a positioning and paying method based on Internet of Vehicles, wherein after receiving the service entity identifier sent by the service provider with regard to the service request, the method further comprises: generating authorization prompt information including the service entity identifier; and in response to the authorization processing for the authorization prompt information, determining that the first digital currency wallet completes payment authorization for the service entity identifier.

According to one or more embodiments of the present disclosure, provided is a positioning and paying method based on Internet of Vehicles, wherein the authorization prompt information comprises: a password control, wherein the password control instructs to input a payment password of the first digital currency wallet; determining, in response to the authorization processing with regard to the authorization prompt information, that the first digital currency wallet completes payment authorization with regard to the service entity identifier comprises: in response to receiving the payment password, verifying the payment password by using the first digital currency wallet; and if the verification is passed, determining that the first digital currency wallet completes payment authorization with regard to the service entity identifier.

According to one or more embodiments of the present disclosure, provided is a positioning and paying method based on Internet of Vehicles, further comprising: the first digital currency wallet communicating with the second digital currency wallet by means of a direct communication interface; transmitting the payment digital currency string to the second digital currency wallet included in the service provider comprises: the first digital currency wallet transmitting the payment digital currency string to the second digital currency wallet by means of the direct communication interface.

To achieve the described object, according to a second aspect of the embodiments of the present disclosure, provided is a positioning and paying method based on Internet of Vehicles, which is applied to a management server and comprises: in response to receiving a service request from an in-vehicle client, determining a service entity identifier according to position information and a service type which are indicated by the service request; sending the service entity identifier to the in-vehicle client, so that a first digital currency wallet comprised in the in-vehicle client performs a payment authorization operation with regard to the service entity identifier; and after a service entity corresponding to the service entity identifier completes a service, determining a payment status of the first digital currency wallet.

According to one or more embodiments of the present disclosure, provided is a positioning and paying method based on Internet of Vehicles, wherein determining a service entity identifier according to position information and a service type which are indicated by the service request comprises: determining position information of one or more service entities according to the position information of the vehicle; and on the basis of a preset policy, selecting, from the position information of the one or more service entities, a service entity identifier for providing a service for a vehicle where the in-vehicle client is located.

According to one or more embodiments of the present disclosure, provided is a positioning and paying method based on Internet of Vehicles, wherein the preset policy comprises: acquiring coordinate information indicated by a map including various service entities; calculating a distance value on the basis of the coordinate information of the service entities and coordinate information included in the position information of the vehicle where the in-vehicle client is located; and selecting a service entity corresponding to a minimum distance value as a service entity corresponding to the vehicle.

According to one or more embodiments of the present disclosure, provided is a positioning and paying method based on Internet of Vehicles, wherein the preset policy comprises: according to the position information of the vehicle where the in-vehicle client is located and the image data of various service entities, determining whether the service entities are optional service entities which can provide a service for the vehicle; and selecting, from the optional service entities, an optional service entity with a minimum distance value from the vehicle as a service entity corresponding to the vehicle.

According to one or more embodiments of the present disclosure, provided is a positioning and paying method based on Internet of Vehicles, wherein the preset policy comprises: on the basis of sensors included in the service entities, acquiring distance values between various service entities and the vehicle where the in-vehicle client is located; and selecting a service entity with a minimum distance value as a service entity corresponding to the vehicle.

According to one or more embodiments of the present disclosure, provided is a positioning and paying method based on Internet of Vehicles, wherein
for the cases where the second digital currency wallet is provided in the management server, determining a payment status of the first digital currency wallet comprises: verifying the payment digital currency string after the second digital currency wallet receives the payment digital currency string sent from the first digital currency wallet; and after the verification is passed, determining that the first digital currency wallet completes payment.

According to one or more embodiments of the present disclosure, provided is a positioning and paying method based on Internet of Vehicles, wherein
for the cases where the second digital currency wallet is provided in the service entity client, determining a payment status of the first digital currency wallet, comprises: receiving the payment status sent by the server entity client with regard to the first digital currency wallet.

According to a third aspect of the embodiments of the present disclosure, provided is a positioning and paying method based on Internet of Vehicles, applied to a service entity client, comprising: in response to a service entity initiating a service, metering and charging the service of the service entity; determining a service fee in response to the service entity completing the service; and sending the service fee to an in-vehicle serving end, so that the in-vehicle serving end pays the service fee by means of the first digital currency wallet.

In order to achieve the described object, according to a fourth aspect of the embodiments of the present disclosure, provided is an in-vehicle client, comprising: an in-vehicle service module and a fee payment module; wherein
the in-vehicle service module is configured to send a service request to a service provider, and receive a service entity identifier sent by the service provider with regard to the service request;
the fee payment module is configured to receive, in cases where the first digital currency wallet completes payment authorization with regard to the service entity identifier, fee deduction information sent by the service provider, and generate a payment digital currency string matching the fee deduction information by means of the first digital currency wallet; and transmit the payment digital currency string to a second digital currency wallet included in the service provider.

To achieve the above object, according to a fifth aspect of the embodiments of the present disclosure, provided is a management server, comprising: a service entity positioning module, a service entity management module and a payment management module; wherein
the service entity positioning module is configured to determine, in response to receiving a service request from an in-vehicle client, a service entity identifier according to position information and a service type which are indicated by the service request;
the service entity management module is configured to send the service entity identifier to the in-vehicle client, so that a first digital currency wallet comprised in the in-vehicle client performs a payment authorization operation with regard to the service entity identifier; and
the payment management module is configured to determine a payment status of the first digital currency wallet after a service entity corresponding to the service entity identifier completes a service.

To achieve the above object, according to a sixth aspect of the embodiments of the present disclosure, provided is a service entity client, comprising: a metering and charging module and a fee payment module; wherein
the metering and charging module is configured to meter and charge the service of the service entity in response to the service entity initiating a service; and determine a service fee in response to the service entity completing the service;
the fee payment module is configured to send the service fee to an in-vehicle serving end, so that the in-vehicle serving end pays the service fee by means of the first digital currency wallet.

To achieve the above object, according to a seventh aspect of an embodiment of the present disclosure, provided is a positioning and paying system based on Internet of Vehicles, comprising: a management server, an in-vehicle client and a service entity client;
the in-vehicle client is configured to send a service request to the management server, and receive a service entity identifier sent by the management server with regard to the service request;
the in-vehicle client is further configured to, in cases where the first digital currency wallet completes payment authorization with regard to the service entity identifier, receive fee deduction information sent by the management server or the service entity client, and generate a payment digital currency string matching the fee deduction information by means of the first digital currency wallet; and transmit the payment digital currency string to a second digital currency wallet included in the service entity or the management server.
the management server is configured to, in response to receiving a service request from the in-vehicle client, determine a service entity identifier according to position information and a service type which are indicated by the service request;
the management server is configured to send the service entity identifier to the in-vehicle client, so that the first digital currency wallet comprised in the in-vehicle client performs a payment authorization operation with regard to the service entity identifier; and
the management server is configured to, after the service entity corresponding to the service entity identifier completes a service, determine a payment status of the first digital currency wallet;
the service entity client is configured to, in response to the service entity initiating a service, meter and charge the service of the service entity; determine a service fee in response to the service entity completing the service; and send the service fee to an in-vehicle serving end, so that the in-vehicle serving end pays the service fee by means of the first digital currency wallet.

To achieve the above object, according to an eighth aspect of embodiments of the present disclosure, provided is an electronic device for positioning and payment based on Internet of Vehicles, comprising: one or more processors; a storage device, storing one or more programs, wherein when the one or more programs are executed by the one or more processors, the one or more processors implement the method as stated in any one of the described positioning and paying methods based on Internet of Vehicles.

To achieve the above object, according to a ninth aspect of the embodiments of the present disclosure, provided is a computer-readable medium, on which a computer program is stored, wherein when the program is executed by a processor, the method as stated in any one of the described positioning and paying methods based on Internet of Vehicles is implemented.

Further effects of the described non-conventional optional modes will be described hereinafter in conjunction with the embodiments.

### Brief Description of the Drawings

The accompanying drawings are used to better understand the present disclosure, and do not constitute limitations to the present disclosure; wherein:
Fig. 1 is a schematic flowchart of a positioning and paying method based on Internet of Vehicles by an in-vehicle client according to an embodiment of the present disclosure;
Fig. 2 is a schematic flowchart of a positioning and paying method based on Internet of Vehicles by a management server according to an embodiment of the present disclosure;
Fig. 3 is a schematic flowchart of a positioning and paying method based on Internet of Vehicles by a service entity client according to an embodiment of the present disclosure;
Fig. 4 is a schematic flowchart of a positioning and paying method based on Internet of Vehicles according to an embodiment of the present disclosure;
Fig. 5 is a schematic structural diagram of an apparatus for a vehicle client according to an embodiment of the present disclosure;
Fig. 6 is a schematic structural diagram of an apparatus for a management server according to an embodiment of the present disclosure;
Fig. 7 is a schematic structural diagram of an apparatus for a service entity server according to an embodiment of the present disclosure;
Fig. 8 is a schematic structural diagram of a positioning and paying system based on Internet of Vehicles according to an embodiment of the present disclosure;
Fig. 9A is a flowchart of a positioning and paying method based on Internet of Vehicles in a scenario where a charging pile charges a vehicle according to an embodiment of the present disclosure;
Fig. 9B is a flowchart of a positioning and paying method based on Internet of Vehicles in a parking management scenario according to an embodiment of the present disclosure;
Fig. 10 is an exemplary system architecture diagram in which the embodiments of the present disclosure may be applied;
Fig. 11 is a schematic structural diagram of a computer system suitable of a terminal device or a server for implementing an embodiment of the present disclosure.

### Detailed Description of the Embodiments

Hereinafter, exemplary embodiments of the present disclosure are illustrated with reference to the accompanying drawings, in which various details of the embodiments of the present disclosure are included to facilitate understanding, and they shall be considered as merely exemplary. Accordingly, a person of ordinary skill in the art would recognize that various changes and modifications of the embodiments described herein can be made without departing from the scope and spirit of the present disclosure. Also, for clarity and conciseness, illustrations of well-known functions and structures are omitted in the following description.

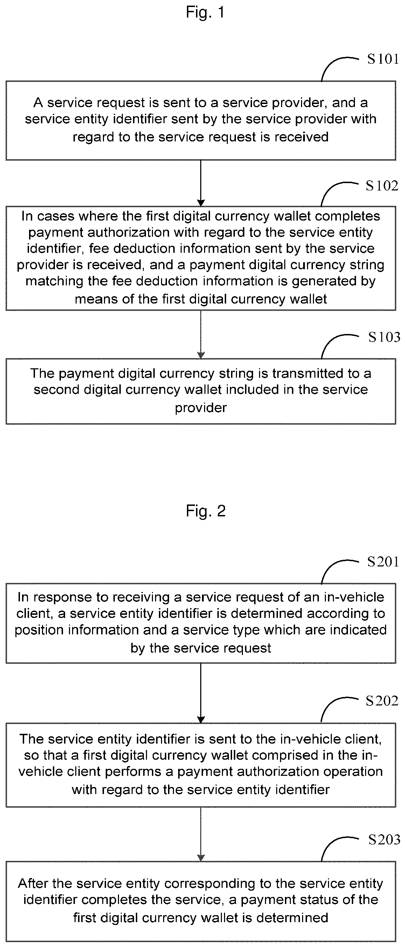

Fig. 1 is a flowchart of a positioning and paying method based on Internet of Vehicles by an in-vehicle client according to an embodiment of the present disclosure. As shown in Fig. 1, the method may include the following steps:
step S101: a service request is sent to a service provider, and a service entity identifier sent by the service provider with regard to the service request is received.

For example, the present embodiment provides a positioning and paying method based on Internet of Vehicles, applied to an in-vehicle client having a first digital currency wallet.

The service request may include position information, a service type, etc. of a vehicle where the in-vehicle client is located; a service entity identifier returned by the server and corresponding to the service request is further received. A service entity corresponds to a service type, for example, if the service type is charging, the service entity may be a charging device (for example, a charging pile), and the service entity identifier is a unique identifier of the service entity such as the serial number of the device (for example, Charger Name of the charging pile: No. 2 charging pile of 123 charging station) or the serial number of the device (Charger SN of the charging pile: 11011134987D12, etc.). It can be understood that a corresponding relationship with a served vehicle can be determined by means of the service entity identifier. That is, the service request includes position information and a service type; receiving the service entity identifier sent by the service provider with regard to the service request comprises: receiving a service entity identifier sent by the service provider and corresponding to the position information and the service type.

The position information may be obtained by the in-vehicle client through an in-vehicle management module (for example, an in-vehicle IVI system (IVI)) to perform vehicle positioning by using a fusion positioning method, wherein the fusion positioning method comprises at least one of followings: V2X (Vehicle-To-Everything, which is interconnection between vehicles and the outside, and is a basic and key technology of intelligent vehicles, automatic driving and intelligent transportation systems)-based vehicle networking distance positioning (i.e. Internet of Vehicles distance information), in-vehicle camera image data recognition (i.e. image information acquired by the vehicle), BeiDou positioning (i.e. geographical information indicated by a positioning system) and map positioning (i.e. map information of the vehicle). The in-vehicle client determines the position of the vehicle in conjunction with the vehicle stop state. For example, a service type is charging a vehicle, an in-vehicle client can acquire V2X positioning distance, i.e. acquiring a distance V2X_distance from an in-vehicle V2X module to a charging pile V2X module, and distance values to a plurality of charging piles V2X modules; can also acquire BeiDou positioning information BDS_Info acquired by the in-vehicle BeiDou module; can also acquire map coordinate information Map_Info corresponding to the position of the vehicle; can also acquire a charging pile identifier identified by image data obtained by means of an in-vehicle camera, etc.; determine position information of the vehicle by the acquired one or more pieces of information. That is, in response to receiving a service trigger, position information is calculated by means of any one or more of Internet of Vehicles distance information, map information of a vehicle where the in-vehicle client is located, image information of the vehicle, and geographical information indicated by a positioning system. For example, an in-vehicle client encapsulates position information into a V2X message, and may generate a service request identifying a service type by filling msgID (vehicle information such as position information) and msgType (information such as a service type), i.e., encapsulating the position information into the service request. The in-vehicle client may also acquire charging pile information by means of an in-vehicle IVI system, and determines and obtains a charging intention of a vehicle in conjunction with a vehicle stop state, thereby enhancing the automation degree of a vehicle payment service.

The service type includes charging a vehicle, refueling a vehicle, settling a parking fee for a vehicle, settling a driving fee for a vehicle, etc. The present disclosure does not limit the specific type and service type of the vehicle.

The service provider may refer to a management server or a service entity client that provides services such as charging, refueling, parking, and the like for an in-vehicle client or a vehicle where an in-vehicle client is located, and manages an entity that provides services, such as a charging pile, a gas station and a parking space. The service entity ID refers to a device serial number, a symbol, a code, etc. used to identify the service entity. Further, the service provider may be a server for managing the service entity, taking the service entity as a charging pile as an example, the server for managing the service entity may be a server to which the service entity belongs. For example, a method for the in-vehicle client to send the service request to the service provider may use V2X broadcasting; the service provider may also be a service entity client (for example, a charging pile client), and the in-vehicle client may send the service request by using a V2X message, a charging pile client acquires a V2X message received by a charging pile V2X module, and after parsing and obtaining position information Positionlnfo in the service request, sends the position information to a charging pile management system, so as to determine a matched service entity device (e.g. a charging pile) for the vehicle according to the position information of the vehicle by means of the charging pile management system.

In step S102, in cases where the first digital currency wallet completes payment authorization with regard to the service entity identifier, fee deduction information sent by the service provider is received, and a payment digital currency string matching the fee deduction information is generated by means of the first digital currency wallet.

For example, authorization needs to be performed before a fee is paid by using a first digital currency wallet, wherein a first digital currency wallet corresponding to a vehicle client may be a hardware wallet (a hardware wallet bound to an in-vehicle client and a vehicle), and may also be an intelligent wallet. The present disclosure does not limit the specific type and content of a digital currency wallet. An account corresponding to a digital currency wallet may be mapped to a personal wallet in a bank system. The interaction between the digital currency wallet and the bank system is performed according to a rule of a digital currency issuer. On the basis of the rule of the digital currency issuer, the digital currency may also not be bound to a bank account of any bank, so that point-to-point transactions can be implemented. The present disclosure does not limit the transaction operation flow of the digital currency wallet.

Further, after the corresponding service entity is determined for the vehicle, the first digital currency wallet is required to complete payment authorization with regard to the service entity identifier, an example authorization method, for example, comprises: an in-vehicle client generates an authorization page, and pop-ups an authorization page by using an in-vehicle central control screen to display authorization prompt information, for example, the prompt information is "whether to use an ABC charging pillar to charge", and prompts the user to input payment password for authorization (i.e. generating authorization prompt information including the service entity identifier), so as to complete payment authorization; wherein the page comprises a password control, and after a user inputs a password using a password control, the in-vehicle client uses an in-vehicle hardware wallet to complete payment password confirmation (i.e., determining that the first digital currency wallet completes payment authorization with regard to the service entity identifier, and in response to receiving the payment password, verifying the payment password by using the first digital currency wallet); in addition, after the user performs authorization, authorization confirmation information (comprising information such as a representation of a first digital currency wallet) is returned to the service provider by means of a V2X broadcast of the in-vehicle IVI system. That is, the authorization prompt information comprises: a password control, wherein the password control instructs to input a payment password of the first digital currency wallet; determining, in response to the authorization processing with regard to the authorization prompt information, that the first digital currency wallet completes payment authorization with regard to the service entity identifier comprises: in response to receiving the payment password, verifying the payment password by using the first digital currency wallet; and
Further, after it is confirmed that the user authorization succeeds, in response to the authorization processing for the authorization prompt information, it is determined that the first digital currency wallet completes payment authorization for the service entity identifier; further, the first digital currency wallet verifies the payment password, and if the verification is passed, it is determined that the first digital currency wallet completes payment authorization with regard to the service entity identifier. By generating an authorization information page, a user performs confirmation according to the acquired authorization information containing a service entity identifier, thereby enhancing the security of a transaction.

Further, fee deduction information sent by the service provider is received, and a payment digital currency string matching the fee deduction information is generated by means of the first digital currency wallet. The fee deduction information includes a service fee to be paid, wherein the service fee is metered and calculated by a service provider (a server or a service entity client) according to a provided service, for example, a fee paid for charging, a fee paid for refueling, a parking management fee, etc.; the in-vehicle client may enable an in-vehicle hardware wallet module to generate a payment digital currency string according to fee deduction information (and according to a result of successful authorization of a user), i.e. generating a payment digital currency string matching the fee deduction information by means of the first digital currency wallet. It can be understood that the payment digital currency string is determined according to the rule of a digital currency wallet, and the present disclosure does not limit the specific format and content of the payment digital currency string.

In step S103, the payment digital currency string is transmitted to a second digital currency wallet included in the service provider.

For example, as described in step S102, the first digital currency wallet generates a payment digital currency string matching the deduction information, and sends the payment digital currency string to a second digital currency wallet included in the service provider, so as to complete the payment of the service fee. The second digital currency wallet may be arranged in a server, and may also be arranged in one or more service entities corresponding to a service entity client, and a plurality of service entities may also use a second digital currency wallet belonging to any service entity to complete fee settlement.

Further, the first digital currency wallet communicates with the second digital currency wallet by means of a direct communication interface (for example, an Internet of Vehicles direct communication interface: a PC5 interface). That is, transmitting the payment digital currency string to the second digital currency wallet included in the service provider comprises: the first digital currency wallet transmitting the payment digital currency string to the second digital currency wallet by means of the direct communication interface. Optionally, the first digital currency wallet may also communicate with the second digital currency wallet by means of a wireless communication (for example, a wireless data network, Wi-Fi, Bluetooth, etc.) interface. It can be understood that the communication efficiency of the communication between the first digital currency wallet and the second digital currency wallet by means of a direct communication interface (for example, an Internet of Vehicles direct communication interface: a PC5 interface) may be improved by means of Internet of Vehicles. Communication can be implemented without a wireless communication network environment, so as to overcome problems caused by wireless communication network interference and wireless communication network congestion, so that a message is broadcast timely and effectively, thereby enhancing the flexibility of communication and payment efficiency, enhancing the service efficiency provided for the vehicle, and enhancing the user experience.

Fig. 2 shows a positioning and paying method based on Internet of Vehicles by a management server according to an embodiment of the present disclosure, and the method as shown in Fig. 2 may comprise the following steps:
in step S201: in response to receiving a service request from an in-vehicle client, a service entity identifier is determined according to position information and a service type which are indicated by the service request.

For example, the detailed description of the service request of the in-vehicle client is the same as that in step S101, and is not repeated herein.

Further, a service entity identifier is determined according to position information and a service type which are indicated by the service request, and the specific method is: determining position information of one or more service entities according to the position information of the vehicle; and on the basis of a preset policy, selecting, from the position information of the one or more service entities, a service entity identifier for providing a service for a vehicle where the in-vehicle client is located. For example, if the service type is charging, according to the position information of the vehicle, a charging pile auxiliary positioning module is used to determine the range of a charging pile, and based on a preset policy, a charging pile identifier for charging the vehicle is selected from one or more charging piles.

The preset policy may include any one or more of the following policies:
1) acquiring coordinate information indicated by a map including various service entities; calculating a distance value on the basis of the coordinate information of the charging device and coordinate information included in the position information of the vehicle where the in-vehicle client is located; and selecting a service entity corresponding to a minimum distance value as a service entity corresponding to the vehicle.
   For example, the management server acquires, according to the position information sent from the vehicle and by using map information, coordinate information that is of a selectable service entity device and associated with the position information sent from the vehicle, calculates distance values between the vehicles and the service entities on the basis of the coordinate information of the one or more service entity devices and the coordinate information included in the vehicle position information, and selects a service entity with the minimum distance value as a service entity of the service vehicle. Taking charging as an example, it uses a map comprising charging pile position information, one or more charging piles are selected according to a set range, distance values between charging piles and vehicles are calculated according to the coordinate information of various charging piles, and a charging pile with a minimum distance value is selected to charge the vehicle.
2) according to the position information of the vehicle where the in-vehicle client is located and the image data of various service entities, determining whether the service entities are optional service entities which can provide a service for the vehicle; and selecting, from the optional service entities, an optional service entity with a minimum distance value from the vehicle as a service entity corresponding to the vehicle.
   For example, according to position information of the vehicle, in conjunction with image data provided by a camera provided by a vehicle client (wherein image data includes information of a service entity), a service entity capable of providing a service is determined. For example, image data of a vehicle includes information of three charging piles, one of the charging piles is occupied and is charging other vehicles, and the other two charging piles are idle and can provide a charging service, then there are two optional charging piles, and a charging pile with a minimum distance value to the vehicle is selected from the two charging piles to charge the vehicle.
3) on the basis of sensors included in the service entities, acquiring distance values between various service entities and the vehicle where the in-vehicle client is located; and selecting a service entity with a minimum distance value as a service entity corresponding to the vehicle.

For example, for example, a service entity is a charging pile, each charging pile may be provided with a sensor for acquiring a distance value between the charging pile and a vehicle and uploading same to a management server, and the management server determines, according to the minimum value of the distance values, a charging pile for charging the vehicle.

In step S202: the service entity identifier is sent to the in-vehicle client, so that a first digital currency wallet comprised in the in-vehicle client performs a payment authorization operation with regard to the service entity identifier.

For example, after determining a service entity identifier (e.g. an identifier such as a charging pile number and a serial number), a management server sends the identifier to an in-vehicle client. The sending method may be sending by means of Internet-of-Vehicles V2X broadcasting, a wireless network, an Internet-of-Vehicles network, etc., so that a first digital currency wallet included in the in-vehicle client performs a payment authorization operation with regard to the service entity identifier. The description of the payment authorization operation performed by the first digital currency wallet with respect to the service entity identifier is consistent with the description of step S102, and will not be repeated redundantly herein.

In step S203, after the service entity corresponding to the service entity identifier completes the service, a payment status of the first digital currency wallet is determined.

For example, after a service entity corresponding to the service entity identifier completes a service, the management server determines a payment status of the first digital currency wallet. The service entity completes a service, for example, completing charging of various stages of a charging process, completing refueling of various stages of a refueling process, and a vehicle leaving a parking lot during parking management. The payment fee for charging may be generated in one or more stages, and the payment may be in a charging start stage, various stages in a charging process, a charging end stage, etc., thereby enhancing the flexibility of payment. Further, the management server determines, according to the acquired payment information of the first digital currency wallet, information such as an identifier of a service entity paid by the first digital currency wallet and a payment fee, and the security and reliability of payment are improved by means of a payment confirmation step.

Further, the second digital currency wallet may be arranged in a management server or a service entity client.

For example, if the second digital currency wallet is arranged in a management server, the management server determining a payment status of the first digital currency wallet includes the second digital currency wallet receiving the payment digital currency string sent from the first digital currency wallet, and executing the step of determining the payment status of the first digital currency wallet; that is, determining, for the cases where the second digital currency wallet is provided in the management server, a payment status of the first digital currency wallet comprises: verifying the payment digital currency string after the second digital currency wallet receives the payment digital currency string sent from the first digital currency wallet; and after the verification is passed, determining that the first digital currency wallet completes payment.

If the second digital currency wallet is arranged at a service entity client, the service entity client may corresponds to one or more service entities, and the plurality of service entities may also use a second digital currency wallet belonging to any service entity together to complete fee settlement; the management server determines a payment status sent by the server entity client with regard to the first digital currency wallet; that is, determining, for the cases where the second digital currency wallet is provided in the service entity client, a payment status of the first digital currency wallet, comprises: receiving the payment status sent by the server entity client with regard to the first digital currency wallet.

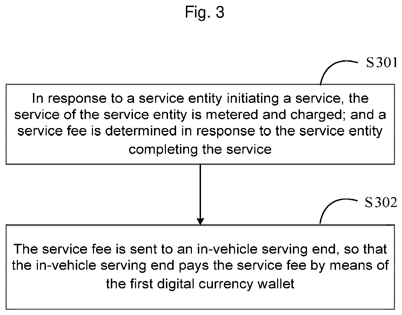

Fig. 3 shows a positioning and paying method based on Internet of Vehicles by a service entity client according to an embodiment of the present disclosure. As shown in Fig. 3, the method may include the following steps:
in step S301: in response to a service entity initiating a service, the service of the service entity is metered and charged; a service fee is determined in response to the service entity completing the service.

For example, the service entity client is associated with one or more service entities. Taking a charging service as an example, the service entity is a charging pile. The service entity client may acquire an instruction for starting a service by using a charging pile display screen or a charging port, or acquire an instruction for starting a service in response to a charging gun being connected to the charging port of the charging pile, etc.; The service entity completes a service, taking a charging service as an example, the completion service may be associated with one or more stages of charging, so as to determine that the service fee may be performed at a charging start stage, at various stages in the charging process, at a charging end stage (including sensing that the charging gun is disconnected from the charging port), etc.

Furthermore, the service entity client may calculate the volumes of charges and fee information to be paied (i.e. determining a service fee) by means of the charging pillar metering module. Taking a parking management service as an example, a service entity client may be associated with a parking management device, and calculate a vehicle parking fee when a vehicle leaves (i.e. determining a service fee); that is, in response to a service entity initiating a service, the service of the service entity is metered and charged; and a service fee is determined in response to the service entity completing the service.

In step S302, the service fee is sent to an in-vehicle serving end, so that the in-vehicle serving end pays the service fee by means of the first digital currency wallet.

For example, the service entity client may send a service fee to an in-vehicle service end, wherein the service fee, for example, includes information of a wallet identifier of the first digital currency wallet included in the in-vehicle client; taking a charging service as an example, the service entity client may display information corresponding to the service by using a central control screen of a charging pile. For example, using an abcde12345 wallet for charging, so as to prompt the user to determine information and trigger the display screen to start charging; that is, the service entity client acquires, from a management server, a wallet identifier of the first digital currency wallet included in the in-vehicle client that is served; and generates a page including the wallet identifier to enable a user to initiate a service using the page.

Further, in cases where the second digital currency wallet is arranged in the service entity client, the service entity client determines a second digital currency wallet associated with the service entity providing the service, so as to receive a service fee by means of the second digital currency wallet, i.e. in cases where the second digital currency wallet is arranged in the service entity client, receiving, by means of the second digital currency wallet, the service fee paid by the in-vehicle serving end by means of the first digital currency wallet, wherein the service entity client may receive the amount of the service fee.

It can be determined therefrom that in the embodiments of the present disclosure, a user can complete service payment without performing a manual operation on a charging pile screen or a central control screen of a vehicle, thereby enhancing service efficiency and enhancing user experience.

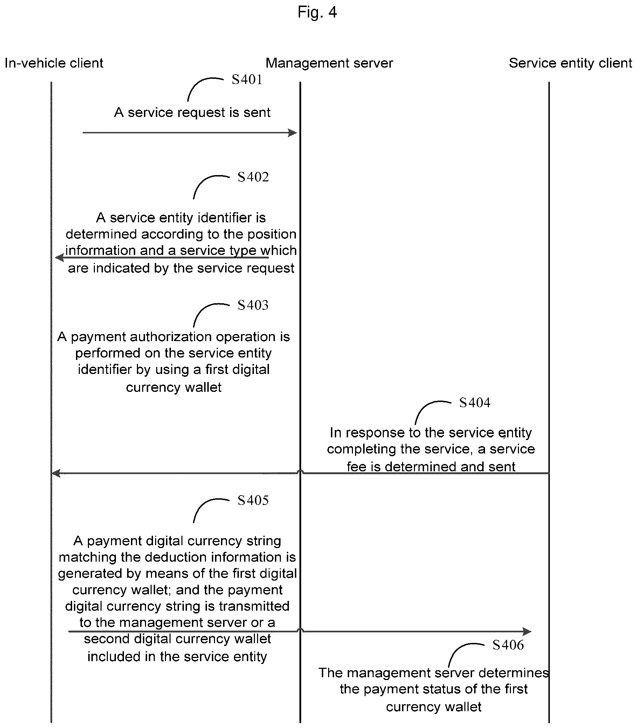

As shown in Fig. 4, an embodiment of the present disclosure provides a flowchart of a positioning and paying method based on Internet of Vehicles. The flow may include the following steps:
step S401: an in-vehicle client sends a service request to a management server;
step S402: the management server determines a service entity identifier according to the position information and a service type which are indicated by the service request;
step S403: the in-vehicle client performs a payment authorization operation on the service entity identifier by using a first digital currency wallet;
step S404: in response to the service entity completing the service, the service entity client determines a service fee and sends the service fee;
step S405: the in-vehicle client generates a payment digital currency string matching the deduction information by means of the first digital currency wallet; and transmits the payment digital currency string to a second digital currency wallet included in the management server or the service entity;
step S406: the management server determines the payment status of the first currency wallet.

It can be understood that if step S404 determines that there are a plurality of time ranges of the service fee (for example, when the service is started, during the service, after the service ends, etc.), steps S405-S406 correspondingly execute the payment operation.

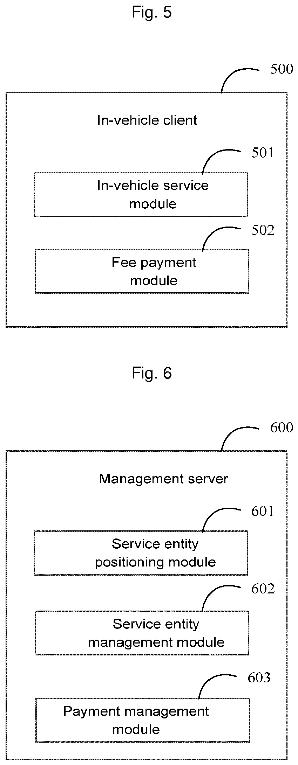

As shown in Fig. 5, an embodiment of the present disclosure provides an in-vehicle client 500, comprising: an in-vehicle service module 501 and a fee payment module 502; wherein
the in-vehicle service module 501 is configured to send a service request to a service provider, and receive a service entity identifier sent by the service provider with regard to the service request;
the fee payment module 502 is configured to receive, in cases where the first digital currency wallet completes payment authorization with regard to the service entity identifier, fee deduction information sent by the service provider, and generate a payment digital currency string matching the fee deduction information by means of the first digital currency wallet; and transmit the payment digital currency string to a second digital currency wallet included in the service provider.

As shown in Fig. 6, an embodiment of the present disclosure provides a management server 600, comprising: a service entity positioning module 601, a service entity management module 602 and a payment management module 603; wherein
the service entity positioning module 601 is configured to determine, in response to receiving a service request from an in-vehicle client, a service entity identifier according to position information and a service type which are indicated by the service request;
the service entity management module 602 is configured to send the service entity identifier to the in-vehicle client, so that a first digital currency wallet comprised in the in-vehicle client performs a payment authorization operation with regard to the service entity identifier; and
the payment management module 603 is configured to determine a payment status of the first digital currency wallet after a service entity corresponding to the service entity identifier completes a service.

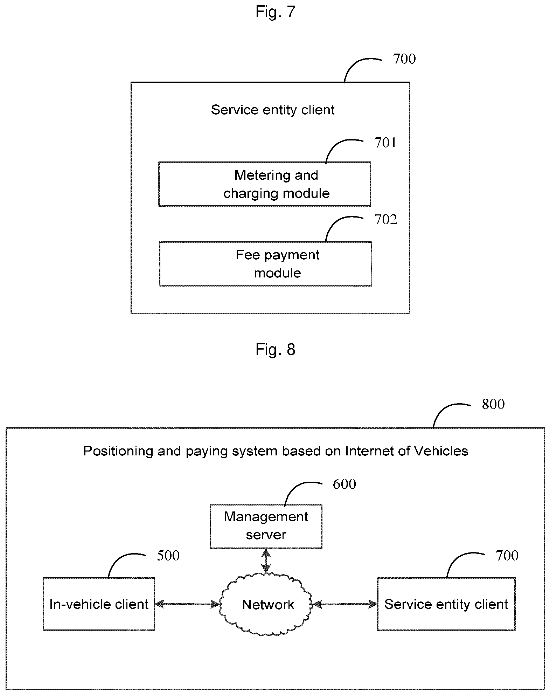

As shown in Fig. 7, an embodiment of the present disclosure provides a service entity client 700, comprising: a metering and charging module 701 and a fee payment module 702; wherein
the metering and charging module 701 is configured to meter and charge the service of the service entity in response to the service entity initiating a service; and determine a service fee in response to the service entity completing the service;

The fee payment module 702 is configured to send the service fee to an in-vehicle serving end, so that the in-vehicle serving end pays the service fee by means of the first digital currency wallet.

As shown in Fig. 8, an embodiment of the present disclosure provides a positioning and paying system based on Internet of Vehicles 800, comprising: an in-vehicle client 500, a management server 600 and a service entity client 700;
a service request is sent to the management server 600 by means of the in-vehicle client 700, and a service entity identifier sent by the management server 600 with regard to the service request is received;
in cases where the first digital currency wallet completes payment authorization with regard to the service entity identifier, fee deduction information sent by the management server 600 or the service entity client 700 is received by means of the in-vehicle client 500, and a payment digital currency string matching the fee deduction information is generated by means of the first digital currency wallet; the payment digital currency string is transmitted to a second digital currency wallet included in the management server or the service entity.

In response to receiving a service request from the in-vehicle client 500, the management server 600 determines a service entity identifier according to position information and a service type which are indicated by the service request;
the management server 600 sends the service entity identifier to the in-vehicle client 500, so that the first digital currency wallet comprised in the in-vehicle client 500 performs a payment authorization operation with regard to the service entity identifier; and
after the service entity corresponding to the service entity identifier completes a service, the management server 600 determines a payment status of the first digital currency wallet;
in response to the service entity initiating a service, the service of the service entity is metered and charged by means of the service entity client 700; determine a service fee in response to the service entity completing the service; the service fee is sent to an in-vehicle serving end 500 by means of the service entity client 700, so that the in-vehicle serving end 500 pays the service fee by means of the first digital currency wallet.

A positioning and paying method based on Internet of Vehicles implemented by means of interaction between an in-vehicle client, a service entity client and a management server is described in details in scenarios of charging a vehicle by means of a charging pile, providing a parking space for the vehicle, and settling a parking fee.

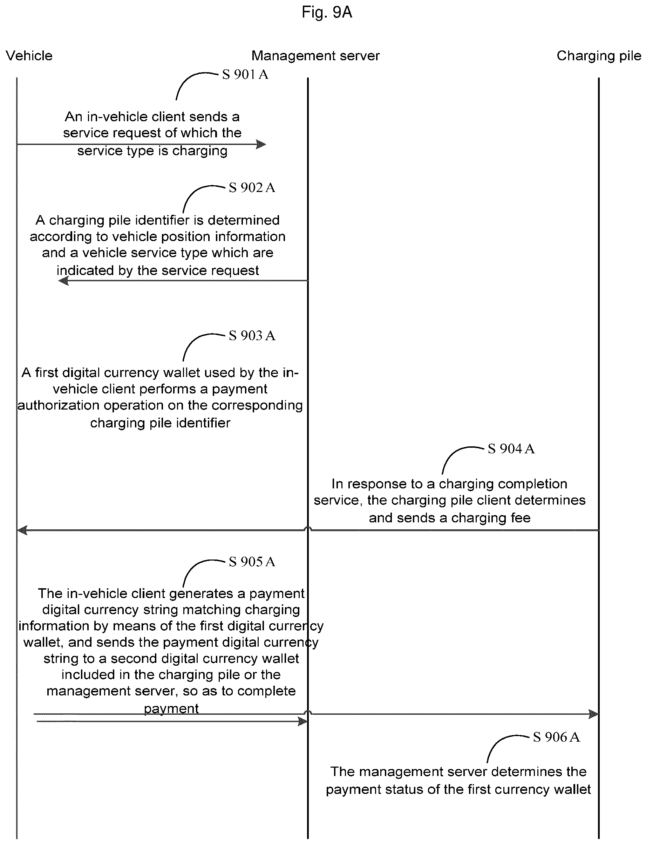

As shown in Fig. 9A, in a scenario of charging a vehicle by means of a charging pile, the positioning and paying method based on Internet of Vehicles may comprise the following steps:
step S901A: an in-vehicle client corresponding to the vehicle sends a service request of which the service type is charging;
step S902A: a management server determines a charging pile identifier according to vehicle position information and a vehicle service type which are indicated by the service request;
step S903A: a first digital currency wallet used by the in-vehicle client corresponding to the vehicle performs a payment authorization operation on the corresponding charging pile identifier;
step S904A: in response to a charging completion service, the charging pile client corresponding to the charging pile determines and sends a charging fee;
step S905A: the in-vehicle client corresponding to the vehicle generates a payment digital currency string matching charging information by means of the first digital currency wallet, and sends the payment digital currency string to a second digital currency wallet included in the charging pile or the management server, so as to complete payment, wherein the first digital currency wallet and the second digital currency wallet may directly interact with each other, or may interact with each other by means of a digital currency platform;
step S906A: the management server determines the payment status of the first currency wallet, wherein the management server may store interaction information corresponding to the payment;
it can be understood that, if it is determined in step S904A that there are a plurality of situations in the time range of the charge fee (for example, after the vehicle is connected to the charging pile, during the charging process, after the vehicle for which charging has ended is disconnected from the charging pile, etc.), the operations of step S905A-step S906A are correspondingly executed for each payment triggering operation.

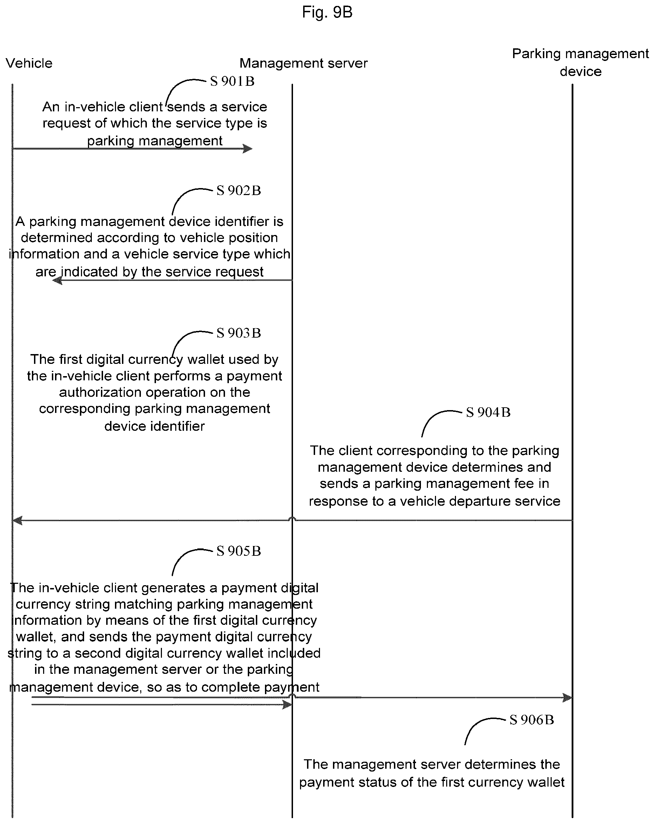

As shown in Fig. 9B, in a scenario where a parking space is provided for a vehicle and a parking fee is settled, the positioning and paying method based on Internet of Vehicles may comprise the following steps:
step S901 B: an in-vehicle client corresponding to the vehicle sends a service request of which the service type is parking management;
step S902B: the management server determines a parking management device identifier according to vehicle position information and a service type which are indicated by the service request; wherein the parking management device is a device installed in a parking lot;
step S903B: the first digital currency wallet used by the in-vehicle client corresponding to the vehicle performs a payment authorization operation on the corresponding parking management device identifier;
step S904B: the client corresponding to the parking management device determines and sends a parking management fee in response to a vehicle departure service;
step S905B: the in-vehicle client corresponding to the vehicle generates a payment digital currency string matching parking management information by means of the first digital currency wallet, and sends the payment digital currency string to a second digital currency wallet included in the management server or the parking management device, so as to complete payment, wherein the first digital currency wallet and the second digital currency wallet may directly interact with each other, or may interact with each other by means of a digital currency platform;
step S906B: the management server determines the payment status of the first currency wallet, wherein the management server may store interaction information corresponding to the payment;

The embodiments of the present disclosure further provide an electronic device for positioning and payment based on Internet of Vehicles, comprising: one or more processors; a storage device, storing one or more programs, wherein when the one or more programs are executed by the one or more processors, the one or more processors implement the method provided by any one of the above embodiments.

An embodiment of the present disclosure further provides a computer-readable medium, on which a computer program is stored, and when the program is executed by the processor, the method provided by any one of the above embodiments is implemented.

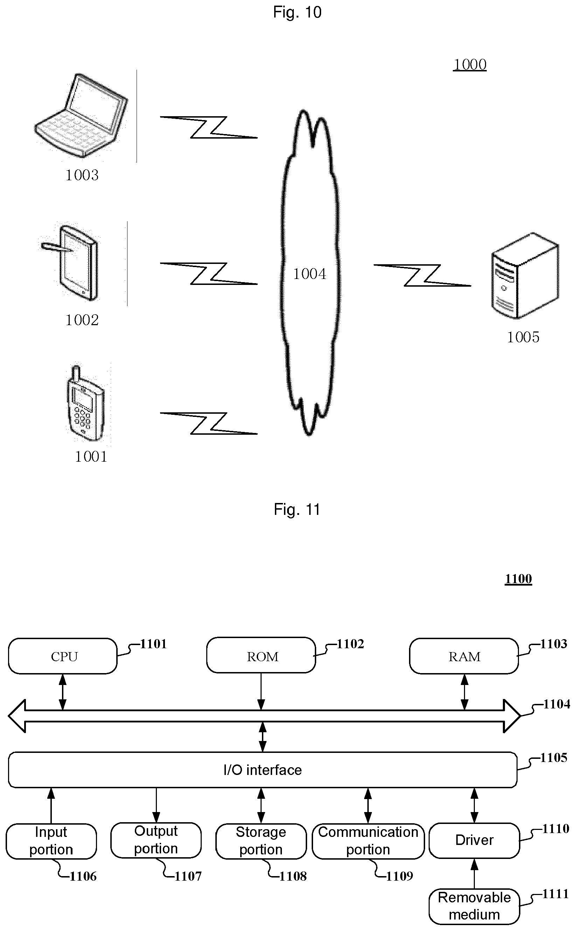

Fig. 10 illustrates an exemplary system architecture 1000 of a positioning and paying method based on Internet of Vehicles or a positioning and payment apparatus based on Internet of Vehicles which may be applied to the embodiments of the present disclosure.

As shown in Fig. 10, the system architecture 1000 may comprise terminal devices 1001, 1002 and 1003, a network 1004, and a server 1005. The network 1004 is a medium that may be used to provide communication links between the terminal devices 1001, 1002 and 1003 and the server 1005. The network 1004 may comprise a variety of connection types, such as a wire, a wireless communication link or a fiber optic cable.

A user may use the terminal devices 1001, 1002 and 1003 to interact with the server 1005 over the network 1004, to receive or send messages, etc. Various client applications may be installed on the terminal devices 1001, 1002 and 1003, for example, an in-vehicle client and a service entity client.

The terminal devices 1001, 1002 and 1003 may be various electronic devices that have a display screen and support various client applications, including but not limited to a smart phone, a tablet computer, a laptop computer, an in-vehicle device, an Internet-of-things device, an Internet-of-Vehicles device, a desktop computer, etc.

The server 1005 may be a server providing various services, for example, a backend management server providing support for client applications used by users by using the terminal devices 1001, 1002 and 1003. The backend management server may process the received service request of the in-vehicle client, and return the determined service entity identifier corresponding to the in-vehicle client to the terminal device.

It should be noted that, the positioning and paying method based on Internet of Vehicles provided in the embodiment of the present disclosure is generally executed by the terminal devices 1001, 1002 and 1003, the positioning and paying method based on Internet of Vehicles provided in the embodiment of the present disclosure is generally executed by the server 1005, and accordingly, the in-vehicle client or the service entity client is generally arranged in the terminal devices 1001, 1002 and 1003; a management server is generally provided in the server 1005.

It should be understood that the numbers of the terminal devices, networks, and servers in Fig. 10 are only illustrative. The numbers of the terminal devices, networks, and servers can be configured according to actual requirements.

Referring now to Fig. 11, the Figure shows a block diagram of a computer system 1100 of a terminal device suitable for implementing an embodiment of the present disclosure. The terminal device illustrated in Fig. 11 is merely an example, and is not intended to limit functions and scope of application of the embodiments of the present disclosure.

As shown in Fig. 11, the computer system 1100 comprises a central processing unit (CPU) 1101 that can perform various suitable actions and processes in accordance with a program stored in a read only memory (ROM) 1102 or a program loaded from a storage portion 1108 into a random access memory (RAM) 1103. In the RAM 1103, various programs and data necessary for the operation of the system 1100 are also stored. The CPU 1101, the ROM 1102 and the RAM 1103 are connected to one another by means of a bus 1104. An input/output (I/O) interface 1105 is also connected to the bus 1104.

The following components are connected to the I/O interface 1105: an input portion 1106 including a keyboard, mouse, etc.; an output portion 1107 including, for example, a cathode ray tube (CRT), a liquid crystal display (LCD) and a speaker; a storage portion 1108 including a hard disk, etc.; and a communication portion 1109 including a network interface card such as an LAN card and a modem. The communication portion 1109 performs communication processing by means of a network such as the Internet. A driver 1110 is also connected to an I/O interface 1105 as needed.

A removable medium 1111 such as a magnetic disk, an optical disk, a magneto-optical disk and a semiconductor memory is installed on the drive 1110 as required, so that a computer program read therefrom is installed into the storage portion 1108 as required.

In particular, according to the embodiments of the present disclosure, the processes described above with reference to the flowcharts can be implemented as computer software programs. For example, the embodiments of the present disclosure include a computer program product comprising a computer program carried on a computer-readable medium. The computer program comprises a program code for executing the method as shown in the flowchart. In such embodiments, the computer program may be downloaded and installed from the network by means of a communication portion 1109, and/or installed from a removable medium 1111. When the computer program is executed by the central processing unit (CPU) 1101, the described functions defined in the system of the present disclosure are executed.

It should be noted that the computer-readable medium in the present disclosure may be a computer-readable signal medium or a computer-readable storage medium, or any combination thereof. The readable storage medium can be, for example, but is not limited to, an electronic, magnetic, optical, electromagnetic, infrared, or semiconductor system, apparatus, or device, or any combination thereof. More specific examples of the computer-readable storage medium may include, but are not limited to, electrical connections with one or more wires, a portable computer disk, a hard disk, a random access memory (RAM), a read-only memory (ROM), an erasable Programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium that can contain or store programs for use by or in combination with an instruction execution system, apparatus, or device. In the present disclosure, the computer-readable signal medium can include a data signal in baseband or propagated as part of a carrier wave, which carries readable program codes. Such a propagated data signal can take many forms, including but not limited to electromagnetic signals, optical signals, or any suitable combination of the above. The readable signal medium can also be any readable medium other than a readable storage medium, and the readable medium can send, propagate, or transmit a program for use by or in combination with an instruction execution system, apparatus, or device. The program codes contained on the readable medium can be transmitted through any appropriate medium, including but not limited to wireless, wired, optical fiber cable, RF, etc., or any suitable combination of the above.

The flowcharts and block diagrams in the drawings show possible architectures, functions, and operations of the system, method, and computer program product according to the embodiments of the present disclosure. In this regard, each block in the flowcharts or block diagrams may represent a module, a program segment, or part of codes containing one or more executable instructions for implementing specified logical functions. It is also to be noted that in some alternative implementations, the functions marked in the blocks may occur in an order different from those marked in the drawings. For example, two successive blocks may, in fact, be executed basically in parallel or in a reverse order, which depends on the functions involved. It is also to be noted that each block in the block diagrams and/or flowcharts and a combination of blocks in the block diagrams and/or flowcharts may be implemented by a special-purpose hardware-based system executing a specified function or operation or may be implemented by a combination of special-purpose hardware and computer instructions.

The modules involved in the embodiments of the present disclosure may be implemented by software or hardware. The described modules and/or units can also be provided in a processor, and for example, can be described as: a processor comprises an in-vehicle service module and a payment module; The names of these modules are not intended to limit the module itself in a certain circumstance, for example, the in-vehicle service module may also be described as "a module for sending a service request to a service provider, and receiving a service entity identifier sent by the service provider with regard to the service request".

As another aspect, the present disclosure also provides a computer-readable medium. The computer-readable medium may be included in the device described in the above embodiments, or a stand-alone computer-readable medium not assembled into the device. The computer-readable medium bears one or more programs. When the one or more programs are executed by a device, the device is enabled to, in cases where the device is applied to an in-vehicle client having a first digital currency wallet, comprise sending a service request to a service provider, and receiving a service entity identifier sent by the service provider with regard to the service request; in cases where the first digital currency wallet completes payment authorization with regard to the service entity identifier, receiving fee deduction information sent by the service provider, and generating a payment digital currency string matching the fee deduction information by means of the first digital currency wallet; and transmit the payment digital currency string to a second digital currency wallet included in the service provider.

Where the device is applied to a management server, the method comprises: in response to receiving a service request from an in-vehicle client, determining a service entity identifier according to position information and a service type which are indicated by the service request; sending the service entity identifier to the in-vehicle client, so that a first digital currency wallet comprised in the in-vehicle client performs a payment authorization operation with regard to the service entity identifier; and after a service entity corresponding to the service entity identifier completes a service, determining a payment status of the first digital currency wallet.

In cases where the device is applied to a management server, the method comprises: in response to receiving a service request from an in-vehicle client, determining a service entity identifier according to position information and a service type which are indicated by the service request; sending the service entity identifier to the in-vehicle client, so that a first digital currency wallet comprised in the in-vehicle client performs a payment authorization operation with regard to the service entity identifier; and after a service entity corresponding to the service entity identifier completes a service, determining a payment status of the first digital currency wallet.

In the embodiments of the present disclosure, positioning is performed by using an in-vehicle client and on the basis of the Internet of Vehicles, so as to obtain position information of a vehicle; and a management server determines a corresponding service entity for the vehicle on the basis of the position information, so as to automatically complete a fee payment operation by using a first digital currency wallet that is included in the in-vehicle client and a second digital currency wallet that is included in the service entity. Thus, the problems of a low degree of automation and a low payment efficiency caused by manual fee payment are overcome, thereby enhancing the user experience.

The specific embodiments do not limit the scope of protection of the present disclosure. It will be apparent to a person skilled in the art that various modifications, combinations, sub-combinations, and replacements can be made according to design requirements and other factors. Any modifications, equivalent replacements, improvements, etc. made within the spirit and principle of the present disclosure shall belong to the scope of protection of the present disclosure.

## Claims

1. A positioning and paying method based on Internet of Vehicles, applied to an in-vehicle client having a first digital currency wallet, comprising:
sending a service request to a service provider, and receiving a service entity identifier sent by the service provider with regard to the service request;
in cases where the first digital currency wallet completes payment authorization with regard to the service entity identifier, receiving fee deduction information sent by the service provider, and generating a payment digital currency string matching the fee deduction information by means of the first digital currency wallet; and
transmitting the payment digital currency string to a second digital currency wallet included in the service provider.

2. The method as claimed in claim 1, wherein
the service request comprises position information and a service type;
the receiving a service entity identifier sent by the service provider with regard to the service request comprises:
receiving the service entity identifier sent by the service provider and corresponding to the position information and the service type.

3. The method as claimed in claim 2, further comprising:
calculating, in response to receiving a service trigger, position information by means of any one or more of Internet of Vehicles distance information, map information of a vehicle where the in-vehicle client is located, image information of the vehicle, and geographical information indicated by a positioning system; and
encapsulating the position information into the service request.

4. The method as claimed in claim 1, after the receiving a service entity identifier sent by the service provider with regard to the service request, the method further comprising:
generating authorization prompt information including the service entity identifier; and
determining, in response to authorization processing with regard to the authorization prompt information, that the first digital currency wallet completes payment authorization with regard to the service entity identifier.

5. The method as claimed in claim 4, wherein
the authorization prompt information comprises: a password control, wherein the password control instructs to input a payment password of the first digital currency wallet;
the determining, in response to authorization processing with regard to the authorization prompt information, that the first digital currency wallet completes payment authorization with regard to the service entity identifier comprises:
in response to receiving the payment password, verifying the payment password by using the first digital currency wallet; and
if the verification is passed, determining that the first digital currency wallet completes payment authorization with regard to the service entity identifier.

6. The method as claimed in claim 5, further comprising:
the first digital currency wallet communicating with the second digital currency wallet by means of a direct communication interface;
the transmitting the payment digital currency string to a second digital currency wallet included in the service provider comprises:
transmitting, by the first digital currency wallet, the payment digital currency string to the second digital currency wallet by means of the direct communication interface.

7. A positioning and paying method based on Internet of Vehicles, applied to a management server, comprising:
in response to receiving a service request from an in-vehicle client, determining a service entity identifier according to position information and a service type which are indicated by the service request;
sending the service entity identifier to the in-vehicle client, so that a first digital currency wallet comprised in the in-vehicle client performs a payment authorization operation with regard to the service entity identifier; and
after a service entity corresponding to the service entity identifier completes a service, determining a payment status of the first digital currency wallet.

8. The method as claimed in claim 7, wherein the determining a service entity identifier according to position information and a service type which are indicated by the service request comprises:
determining position information of one or more service entities according to the position information of the vehicle; and on the basis of a preset policy, selecting, from position information of the one or more service entities, the service entity identifier for providing a service for a vehicle where the in-vehicle client is located.

9. The method as claimed in claim 8, wherein the preset policy comprises:
acquiring coordinate information indicated by a map including various service entities; calculating distance values on the basis of the coordinate information of the service entities and coordinate information included in the position information of the vehicle where the in-vehicle client is located; and selecting a service entity corresponding to a minimum distance value as a service entity corresponding to the vehicle.

10. The method as claimed in claim 8, wherein the preset policy comprises:
determining whether a service entity is an optional service entity which is able to provide a service for the vehicle according to the position information of the vehicle where the in-vehicle client is located and the image data of various service entities; and selecting, from optional service entities, an optional service entity with a minimum distance value from the vehicle as a service entity corresponding to the vehicle.

11. The method as claimed in claim 8, wherein the preset policy comprises:
on the basis of sensors included in the service entities, acquiring distance values between various service entities and the vehicle where the in-vehicle client is located; and selecting a service entity with a minimum distance value as a service entity corresponding to the vehicle.

12. The method as claimed in claim 7, wherein
for a cases where a second digital currency wallet is provided in the management server,
the determining a payment status of the first digital currency wallet, comprises:
verifying the payment digital currency string after the second digital currency wallet receives the payment digital currency string sent from the first digital currency wallet; and
after the verification is passed, determining that the first digital currency wallet completes payment.

13. The method as claimed in claim 7, wherein
for a cases where the second digital currency wallet is provided in the service entity client,
the determining a payment status of the first digital currency wallet, comprises:
receiving a payment status sent by the server entity client with regard to the first digital currency wallet.

14. A positioning and paying method based on Internet of Vehicles, applied to a service entity client, comprising:
in response to a service entity initiating a service, metering and charging the service of the service entity;
determining a service fee in response to the service entity completing the service; and
sending the service fee to an in-vehicle serving end, so that the in-vehicle serving end pays the service fee by means of the first digital currency wallet.

15. The method as claimed in claim 14, wherein
for a cases where a second digital currency wallet is provided in the service entity client,
receiving, by means of the second digital currency wallet, the service fee paid by the in-vehicle serving end by means of the first digital currency wallet.

16. The method as claimed in claim 14, further comprising:
acquiring, from a management server, a wallet identifier of the first digital currency wallet included in the in-vehicle client that is served; and
generating a page including the wallet identifier to enable a user to initiate a service using the page.

17. An in-vehicle client, comprising: an in-vehicle service module and a fee payment module; wherein
the in-vehicle service module is configured to send a service request to a service provider, and receive a service entity identifier sent by the service provider with regard to the service request;
the fee payment module is configured to receive, in cases where the first digital currency wallet completes payment authorization with regard to the service entity identifier, fee deduction information sent by the service provider, and generate a payment digital currency string matching the fee deduction information by means of the first digital currency wallet; and transmitting the payment digital currency string to a second digital currency wallet included in the service provider.

18. A management server, comprising: a service entity positioning module, a service entity management module and a payment management module; wherein
the service entity positioning module is configured to determine, in response to receiving a service request from an in-vehicle client, a service entity identifier according to position information and a service type which are indicated by the service request;
the service entity management module is configured to send the service entity identifier to the in-vehicle client, so that a first digital currency wallet comprised in the in-vehicle client performs a payment authorization operation with regard to the service entity identifier; and
the payment management module is configured to determine a payment status of the first digital currency wallet after a service entity corresponding to the service entity identifier completes a service.

19. A service entity client, comprising: a metering and charging module and a payment module; wherein
the metering and charging module is configured to meter and charge the service of the service entity in response to the service entity initiating a service; and determine a service fee in response to the service entity completing the service;
the fee payment module is configured to send the service fee to an in-vehicle serving end, so that the in-vehicle serving end pays the service fee by means of the first digital currency wallet.

20. A positioning and paying system based on Internet of Vehicles, comprising: a management server, an in-vehicle client, and a service entity client;
the in-vehicle client is configured to send a service request to the management server, and receive a service entity identifier sent by the management server with regard to the service request;
the in-vehicle client is further configured to receive, in cases where the first digital currency wallet completes payment authorization with regard to the service entity identifier, fee deduction information sent by the management server or the service entity client, and generate a payment digital currency string matching the fee deduction information by means of the first digital currency wallet; transmit the payment digital currency string to a second digital currency wallet included in the management server or the service entity;
the management server is configured to determine, in response to receiving a service request from the in-vehicle client, a service entity identifier according to position information and a service type which are indicated by the service request;
the management server is configured to send the service entity identifier to the in-vehicle client, so that the first digital currency wallet comprised in the in-vehicle client performs a payment authorization operation with regard to the service entity identifier; and
the management server is configured to, after the service entity corresponding to the service entity identifier completes a service, determine a payment status of the first digital currency wallet;
the service entity client is configured to, in response to the service entity initiating a service, meter and charge the service of the service entity; determine a service fee in response to the service entity completing the service; and send the service fee to an in-vehicle serving end, so that the in-vehicle serving end pays the service fee by means of the first digital currency wallet.

21. An electronic device, comprising:
one or more processors;
a storage device for storing one or more programs,
when the one or more programs are executed by the one or more processors, the one or more processors implement the method as claimed in any one of claims 1 to 16.

22. A computer-readable medium, on which a computer program is stored, wherein when the program is executed by a processor, the method as claimed in any one of claims 1 to 16 is implemented.
